# EUROPÄISCHE PATENTSCHRIFT

(11) **EP 3 389 888 B1**
(45) Veröffentlichungstag und Bekanntmachung des Hinweises auf die Patenterteilung: **18.09.2019**
(21) Anmeldenummer: 16812942.7
(22) Anmeldetag: 15.12.2016
(51) Int. Cl.: B21D 5/02

(54) **BIEGEPRESSE MIT WERKZEUGWECHSELVORRICHTUNG**
BENDING PRESS WITH TOOL-CHANGING DEVICE
PRESSE À CINTRER MUNIE D'UN DISPOSITIF DE CHANGEMENT D'OUTIL

(30) Priorität: 16.12.2015 AT 510712015
(43) Veröffentlichungstag der Anmeldung: 24.10.2018
(73) Patentinhaber: TRUMPF Maschinen Austria GmbH & Co. KG., 4061 Pasching (AT)
(72) Erfinder: CAVICCHIA, Luigi, 10028 Trofarello (TO) (IT); TOMASIN, Fabio, 10098 Rivoli (TO) (IT); TONDA ROCH, Andrea, 10141 Torino (IT); VERONESE, Roberto, 10023 Chieri (TO) (IT); VIDOTTO, Giovanni, 10023 Chieri (TO) (IT)
(74) Vertreter: Burger, Hannes
(86) Internationale Anmeldenummer: PCT/EP2016/081244
(87) Internationale Veröffentlichungsnummer: WO 2017/102974

(56) Entgegenhaltungen:
- EP-A1- 1 658 908
- EP-A1- 2 719 476
- EP-A1- 2 913 114
- CH-A5- 668 035
- JP-A- 2007 069 243

## Beschreibung

Die Erfindung betrifft eine Biegepresse, insbesondere Abkantpresse, wie dies im Anspruch 1 angegeben ist.

Aus der AT 511 078 B1 ist ein Werkzeugwechselsystem bekannt, wobei der Werkzeugwechsel mit dem Hinteranschlag durchgeführt wird.

Das Werkzeugwechselsystem der AT 511 078 B1 weist den Nachteil auf, dass der Hinteranschlag nicht ideal für einen Werkezugwechsel geeignet ist.

Die EP 1 658 908 A1 offenbart eine Biegepresse mit einer Werkzeugwechselvorrichtung, welche an einer Linearführung gelagert ist und zum Verschieben der Biegewerkzeuge in der Werkzeugaufhahme dient.

Der vorliegenden Erfindung liegt die Aufgabe zugrunde, ein verbessertes Werkzeugwechselsystem zu schaffen, mit dem der Werkzeugwechsel möglichst schnell durchgeführt werden kann.

Diese Aufgabe der Erfindung wird durch die Merkmale gemäß Anspruch 1 gelöst.

Erfindungsgemäß ist eine Biegepresse, insbesondere Abkantpresse, mit einem ersten feststehenden Pressbalken, sowie einem relativ zu diesem verschiebbaren zweiten Pressbalken ausgebildet. Die Biegepresse umfasst weiters einen Maschinenrahmen an welchem die Pressbalken aufgenommen sind und welcher an einer Innenseite der Pressbalken angeordnet ist. Außerdem an den Pressbalken angeordnete bzw. ausgebildete Werkzeugaufnahmen zur Aufnahme von Biegewerkzeugen, und eine Werkzeugwechselvorrichtung, welche zum Positionieren der Biegewerkzeuge in der Werkzeugaufnahme vorgesehen ist. Die Werkzeugwechselvorrichtung ist an einer ersten Linearführung gelagert, welche an der Innenseite des ersten Pressbalken angeordnet ist. Weiters ist zumindest eine zweite Linearführung ausgebildet, wel che in einem Abstand zur ersten Linearführung angeordnet ist. Weiters ist eine Antriebsvorrichtung ausgebildet mittels welcher die Werkzeugwechselvorrichtung in Längserstreckung der Werkzeugaufnahmen verschiebbar ist.

Die erfindungsgemäße Ausbildung der Biegepresse weist den Vorteil auf, dass die Effizienz beim Wechseln der Biegewerkzeuge erhöht werden kann, da die Zeit zum Wechseln des Biegewerkzeuges verkürzt werden kann. Darüber hinaus kann die Werkzeugwechselvorrichtung durch die beschriebenen Maßnahmen möglichst einfach aufgebaut sein und somit leicht und kostengünstig sein. Durch die Beabstandung der beiden Linearführungen zueinander kann erreicht werden, dass die Werkzeugwechselvorrichtung eine erhöhte Stabilität aufweist.

Erfindungsgemäß ist die zweite Linearführung an einer Außenseite des ersten Pressbalken angeordnet, wobei die Werkzeugwechselvorrichtung ein Portal aufweist, welches die Werkzeugaufnahme des ersten Pressbalken überspannt und an welchem Portal eine erste Führungseinheit der ersten Linearführung und eine zweite Führungseinheit der zweiten Linearführung angeordnet ist. Von Vorteil ist hierbei, dass mittels dem Portal die Werkzeugaufnahme überspannt wird und dadurch die Werkzeugwechselvorrichtung eine hohe Stabilität aufweisen kann.

Die zweite Linearführung kann im Bereich einer Innenseite des zweiten Pressbalken ausgebildet sein, wobei sich ein Grundrahmen der Werkzeugwechselvorrichtung zwischen der ersten Linearführung und der zweiten Linearführung erstreckt, wobei am Grundrahmen die erste Führungseinheit der ersten Linearführung und die zweite Führungseinheit der zweiten Linearführung angeordnet ist. Von Vorteil ist hierbei, dass mittels dem Portal die Werkzeugaufnahme überspannt wird und dadurch die Werkzeugwechselvorrichtung eine hohe Stabilität aufweisen kann.

Darüber hinaus kann vorgesehen sein, dass die Antriebsvorrichtung eine Zahnstange umfasst, welche am ersten Pressbalken angeordnet ist, wobei ein Ritzel welches mit einem an der Werkzeugwechselvorrichtung angeordneten Positioniermotor gekoppelt ist in die Zahnstange eingreift, wodurch die Werkzeugwechselvorrichtung in Längsrichtung der Werkzeugaufnahme verschiebbar ist. Von Vorteil ist hierbei, dass durch den Antrieb mittels der Zahnstange die Werkzeugwechselvorrichtung hohe Beschleunigungswerte aufweisen kann und somit die Effizienz der Werkzeugwechselvorrichtung gesteigert werden kann.

Vorteilhaft ist auch eine Ausprägung, gemäß welcher vorgesehen sein kann, dass die Zahnstange an der Außenseite des ersten Pressbalken angeordnet ist. Diese Positionierung der Zahnstange kann gewählt werden, um diese möglichst gut in die Biegepresse integrieren zu können.

In einer Alternativvariante kann vorgesehen sein, dass die Zahnstange an der Innenseite des ersten Pressbalken angeordnet ist. Diese Positionierung kann gewählt werden, um die Zahnstange möglichst gut in die Biegepresse integrieren zu können.

Ferner kann es zweckmäßig sein, wenn die Werkzeugwechselvorrichtung ein Greifersystem mit einer Greifvorrichtung zum Manipulieren des Biegewerkzeuges umfasst, welche Greifvorrichtung an einem Schlittensystem angeordnet ist, welches Schlittensystem eine horizontale Linearführung umfasst, mittels welcher die Greifvorrichtung in Längsrichtung der Greifarme des Greifersystems zum Biegewerkzeug hin oder vom Biegewerkzeug weg verschiebbar ist, wobei das Schlittensystem eine vertikale Linearführung umfasst an welcher die horizontale Linearführung mit der daran angeordneten Greifvorrichtung vertikal verschiebbar angeordnet ist. Von Vorteil ist hierbei, dass durch das Schlittensystem die Greifvorrichtung gehalten und geführt werden kann, insbesondere wird das Einsetzen eines Biegewerkzeuges in die Werkzeugaufnahme vom Greifersystem unter möglichst geringem Zeiteinsatz bewältigt. Dadurch können die Nebenzeiten, insbesondere die Rüstzeit, der Biegemaschine möglichst kurz gehalten werden.

Weiters kann es zweckmäßig sein, dass an der vertikalen Linearführung zwei der horizontalen Linearführungen angeordnet sind, an welchen jeweils eine Greifvorrichtung ausgebildet ist. Von Vorteil ist hierbei, dass für Biegewerkzeuge welche im oberen Pressbalken eingesetzt sind und für Biegewerkzeuge welche im unteren Pressbalken eingesetzt sind, eine eigene Greifvorrichtung ausgebildet ist. Dadurch kann ein synchrones Rüsten des oberen Pressbalkens und des unteren Pressbalkens erreicht werden und somit die Nebenzeiten weiter verkürzt werden.

Darüber hinaus kann vorgesehen sein, dass die horizontale Linearführung einen auf einer Führungsschiene geführten Führungsschlitten umfasst, auf welchem die Greifvorrichtung aufgenommen ist, wobei der Führungsschlitten mittels einem Aktor, vorzugsweise einem Pneumatikzylinder, zwischen einer ausgeschobenen Einsetzstellung und einer zurückgezogenen Ruhestellung positionierbar ist. Von Vorteil ist hierbei, dass durch eine derartige Anordnung die Greifvorrichtung am Führungsschlitten angeordnet sein kann und somit ein Ausschieben bzw. Einziehen der Greifvorrichtung erreicht werden kann.

Gemäß einer besonderen Ausprägung ist es möglich, dass die Werkzeugwechselvorrichtung einen Schwenkarm umfasst, welcher in eine der Werkzeugaufnahmen einschwenkbar ist, wobei die Biegewerkzeuge mittels dem Schwenkarm positionierbar sind. Von Vorteil ist hierbei, dass durch diese Maßnahme die Biegewerkzeuge einfach in Längsrichtung der Werkzeugaufnahme verschoben werden können.

Entsprechend einer vorteilhaften Weiterbildung kann vorgesehen sein, dass der Schwenkarm mit einem Elektromotor, insbesondere einem Servomotor, bewegungsgekoppelt ist. Dadurch kann der Schwenkarm möglichst schnell und effizient aus einer Ruheposition in eine Schiebeposition eingefahren werden.

Zum besseren Verständnis der Erfindung wird diese anhand der nachfolgenden Figuren näher erläutert.

Es zeigen jeweils in stark vereinfachter, schematischer Darstellung:
- Fig. 1: eine Seitenansicht eines Ausführungsbeispiels einer schematisch dargestellten Bearbeitungsanlage;
- Fig. 2: eine Ansicht von vorne eines Ausführungsbeispiels einer schematisch dargestellten Bearbeitungsanlage;
- Fig. 3: eine Ansicht von vorne eines weiteren Ausführungsbeispiels einer schematisch dargestellten Bearbeitungsanlage;
- Fig. 4: eine perspektivische Ansicht eines Ausführungsbeispiels eines Greifersystems;
- Fig. 5: eine Ansicht von vorne eines Ausführungsbeispiels eines Greifersystems;
- Fig. 6: eine Seitenansicht eines weiteren Ausführungsbeispiels einer schematisch dargestellten Bearbeitungsanlage.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

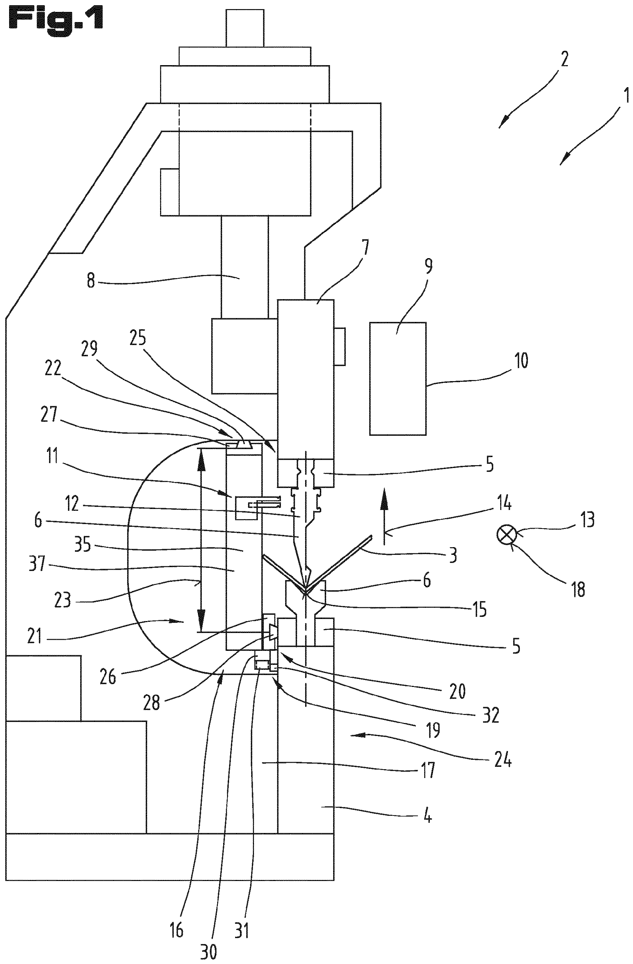

Fig. 1 zeigt in schematischer Darstellung die Seitenansicht einer Bearbeitungsanlage 1. Die Bearbeitungsanlage 1 umfasst eine Abkantpresse 2, welche zum Biegen eines Bleches 3 vorgesehen ist.

Die Abkantpresse 2 umfasst weiters einen ersten feststehenden Pressbalken 4, in welchem eine Werkzeugaufnahme 5 zur Aufnahme eines Biegewerkzeuges 6 ausgebildet ist. Weiters umfasst die Abkantpresse 2 einen zweiten verstellbaren Pressbalken 7 an welchem ebenfalls eine Werkzeugaufnahme 5 zur Aufnahme eines Biegewerkzeuges 6 ausgebildet ist.

Das zu biegende Blech 3 wird für den Biegevorgang zwischen den Biegewerkzeugen 6 des ersten 4 und des zweiten Pressbalken 7 eingelegt. Das im zweiten Pressbalken 7 befestigte Biegewerkzeug 6 respektive der zweite Pressbalken 7 wird durch eine Pressenantriebseinheit 8 in vertikaler Richtung nach oben bzw. nach unten bewegt. Zur Steuerung der Pressenantriebseinheit 8 ist eine Rechnereinheit 9 vorgesehen, welche an eine Eingabe- und/oder Anzeigeeinheit 10 gekoppelt sein kann.

Weiters kann, wie in Fig. 1 dargestellt, vorgesehen sein, dass die Bearbeitungsanlage 1 eine Greifvorrichtung 11 umfasst, welche zur Manipulation des Biegewerkzeuges 6 dient.

Aus Fig. 1 ist weiters ersichtlich, dass das Biegewerkzeug 6 einen Werkzeugkörper 12 aufweist, welcher beim Biegevorgang das zu biegende Blech 3 verformt. Das Biegewerkzeug 6 kann in der Werkzeugaufnahme 5 in horizontaler Verschieberichtung 13 entlang des Klemmabschnittes der Werkzeugaufnahme 5 positioniert werden. Dazu kann das Biegewerkzeug 6 in der horizontalen Verschieberichtung 13 seitlich in die Werkzeugaufnahme 5 der Pressbalken 4 oder 7 eingeschoben werden.

Alternativ dazu ist es auch möglich, dass das Biegewerkzeug 6 in einer vertikalen Einsetzrichtung 14 in die Werkzeugaufnahme 5 eingebracht wird. Für diese Möglichkeit das Biegewerkzeug 6 in die Werkzeugaufnahme 5 einzubringen ist es notwendig, dass das Biegewerkzeug 6 einen Einsetzmechanismus aufweist.

In der Werkzeugaufnahme 5 können mehrere Biegewerkzeuge 6, welche gleichartig ausgebildet sind, nebeneinander positioniert werden und aneinander anschließen. Somit kann erreicht werden, dass Biegekanten 15 von einzelnen Biegewerkzeugen 6 eine entsprechend lange Bearbeitungskante bilden.

Eine weitere Möglichkeit zur Anordnung von Biegewerkzeugen 6 besteht darin, dass in der Werkzeugaufnahme 5 mehrere unterschiedliche Biegewerkzeuge 6 positioniert werden. Diese unterschiedlichen Biegewerkzeuge 6 werden dann für verschiedene Biegevorgänge verwendet und können auch individuell ausgetauscht werden. Werden Biegewerkzeuge 6 unterschiedlicher Art für unterschiedliche Arbeitsschritte verwendet, so ist es üblich, dass diese in einem gewissen Abstand zueinander angeordnet sind.

Um eine möglichst flexible Bearbeitungsanlage 1 zur Verfügung zu stellen, ist es notwendig, dass die Biegewerkzeuge 6 einfach und schnell in der Werkzeugaufnahme 5 gespannt und aus dieser wieder herausgenommen werden können.

Wie aus Fig. 1 ersichtlich kann vorgesehen sein, dass die Greifvorrichtung 11 an einer Werkzeugwechselvorrichtung 16 angeordnet ist. Die Werkzeugwechselvorrichtung 16 kann verschiebbar an einem Maschinenrahmen 17 der Abkantpresse 2 gelagert sein. Insbesondere kann vorgesehen sein, dass die Werkzeugwechselvorrichtung 16 in Längserstreckung 18 der Werkzeugaufnahmen 5 verschiebbar ist, wobei die Längserstreckung 18 parallel zur horizontalen Verschieberichtung 13 verläuft.

Weiters ist vorgesehen, dass die Werkzeugwechselvorrichtung 16 an einer ersten Linearführung 20 gelagert ist. Die erste Linearführung 20 ist hierbei an der Innenseite 21 des ersten Pressbalken 4 angeordnet. Weiters ist eine zweite Linearführung 22 ausgebildet, welche in einem Abstand 23 zur ersten Linearführung 20 angeordnet ist. Dadurch, dass die erste Linearführung 20 und die zweite Linearführung 22 in einem Abstand zueinander angeordnet sind, kann die Werkzeugwechselvorrichtung 16 eine hohe Stabilität aufweisen.

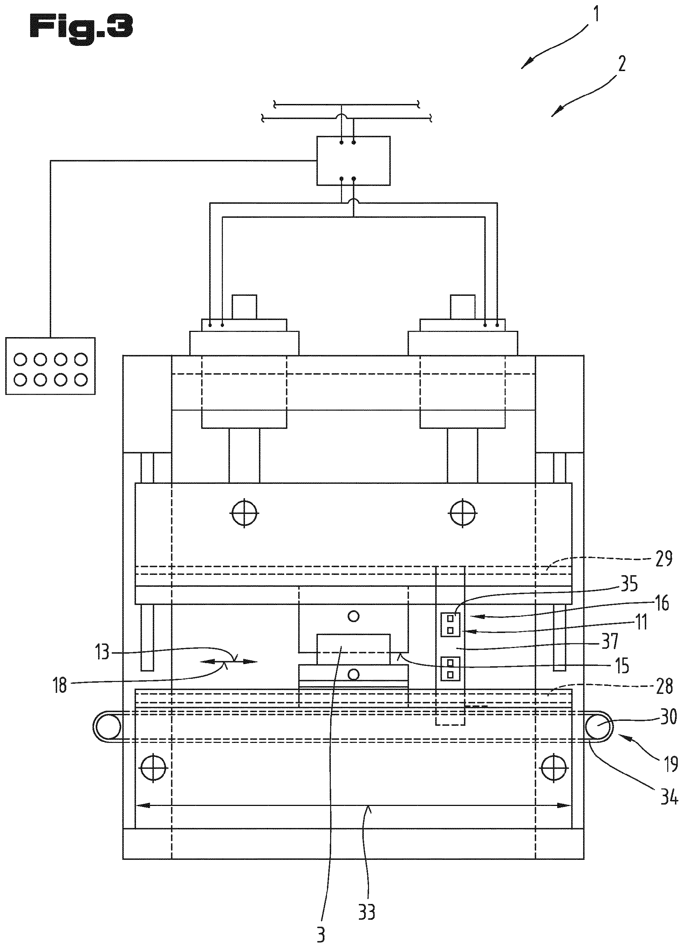

Die zweite Linearführung 22 kann entweder, wie in Fig. 3 dargestellt, an einer Außenseite 24 des ersten Pressbalken 4 angeordnet sein, oder, wie in Fig. 1 dargestellt, an einer Innenseite 25 des zweiten Pressbalkens 7 angeordnet sein.

Weiters kann vorgesehen sein, dass die erste Linearführung 20 eine erste Führungseinheit 26 umfasst, welche an der Werkzeugwechselvorrichtung 16 angeordnet ist. Weiters kann die zweite Linearführung 22 eine zweite Führungseinheit 27 umfassen.

Die beiden Führungseinheiten 26, 27 können in Form eines Führungsschlittens ausgebildet sein, wobei die erste Führungseinheit 26 mit einer ersten Führungsschiene 28 zusammenwirken kann und die zweite Führungseinheit 27 mit einer zweiten Führungsschiene 29 zusammenwirken kann.

Die erste Führungsschiene 28 bzw. die zweite Führungsschiene 29 können jeweils am Maschinenrahmen 17 respektive an den mit dem Maschinenrahmen 17 gekoppelten Pressbalken 4, 7 angeordnet sein.

Wie aus Fig. 1 weiters ersichtlich, kann vorgesehen sein, dass die Antriebsvorrichtung 19 einen Positioniermotor 30 umfasst, welcher an der Werkzeugwechselvorrichtung 16 gelagert ist und an welchem ein Ritzel 31 angeordnet ist. Das Ritzel 31 kann mit einer Zahnstange 32 in Eingriff stehen, welche am Maschinenrahmen 17 befestigt ist. Somit kann die Werkzeugwechselvorrichtung 16 mittels dem Positioniermotor 30 in Längserstreckung 18 der Werkzeugaufnahmen 5 verschoben werden.

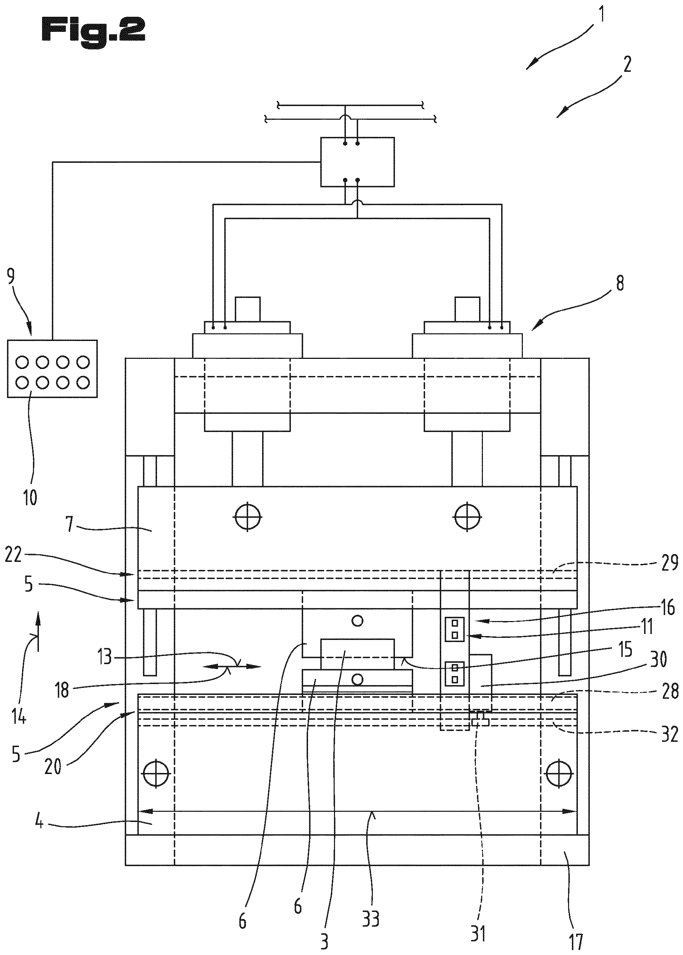

In der Fig. 2 ist eine weitere und gegebenenfalls für sich eigenständige Ausführungsform der Bearbeitungsanlage 1 in einer schematischen Ansicht von vorne gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

In Fig. 2 ist besonders gut ersichtlich, dass vorgesehen sein kann, dass die Werkzeugwechselvorrichtung 16 mittels der Antriebsvorrichtung 19 in der Längserstreckung 18 verschoben werden kann. Die Antriebsvorrichtung 19 kann derart ausgebildet sein, dass die Werkzeugwechselvorrichtung 16 zumindest über die gesamte Länge 33 der Werkzeugaufnahme 5 verschoben werden kann.

Insbesondere kann sich die Zahnstange 32 bzw. die Führungsschienen 28, 29 über die gesamte Länge 33 erstrecken. Darüber hinaus kann auch vorgesehen sein, dass die Zahnstange 32 bzw. die Führungsschienen 28, 29 seitlich über die Werkzeugaufnahmen 5 hinausragen und beispielsweise in einen Werkzeugspeicher hinein ragen. Durch diese Maßnahme kann erreicht werden, dass die Werkzeugwechselvorrichtung 16 die Biegewerkzeuge 6 direkt aus dem Werkzeugspeicher entnehmen und in diesem platzieren kann.

In der Fig. 3 ist eine weitere und gegebenenfalls für sich eigenständige Ausführungsform der Bearbeitungsanlage 1 gezeigt, wobei wiederum für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in den vorangegangenen Figuren 1 und 2 hingewiesen bzw. Bezug genommen.

In der Ausführungsvariante nach Fig. 3 kann vorgesehen sein, dass die Antriebsvorrichtung 19 einen Zahnriemen 34 umfasst, welcher mit der Werkzeugwechselvorrichtung 16 gekoppelt ist. Der Zahnriemen 34 kann zwischen zwei Umlenkrollen aufgenommen sein, welche seitlich der Werkzeugaufnahmen 5 angeordnet sein können. Eine der Umlenkrollen kann mit einem Positioniermotor 30 gekoppelt sein, welcher zum Antrieb des Zahnriemens 34 dient.

Insbesondere kann, wie in den Figuren 1 bis 3 ersichtlich, vorgesehen sein, dass sich ein Grundrahmen 35 der Werkzeugwechselvorrichtung 16 zwischen der ersten Linearführung 20 und der zweiten Linearführung 22 erstreckt, wobei am Grundrahmen 35 die erste Führungseinheit 26 der ersten Linearführung 20 und die zweite Führungseinheit 27 der zweiten Linearführung 22 angeordnet ist.

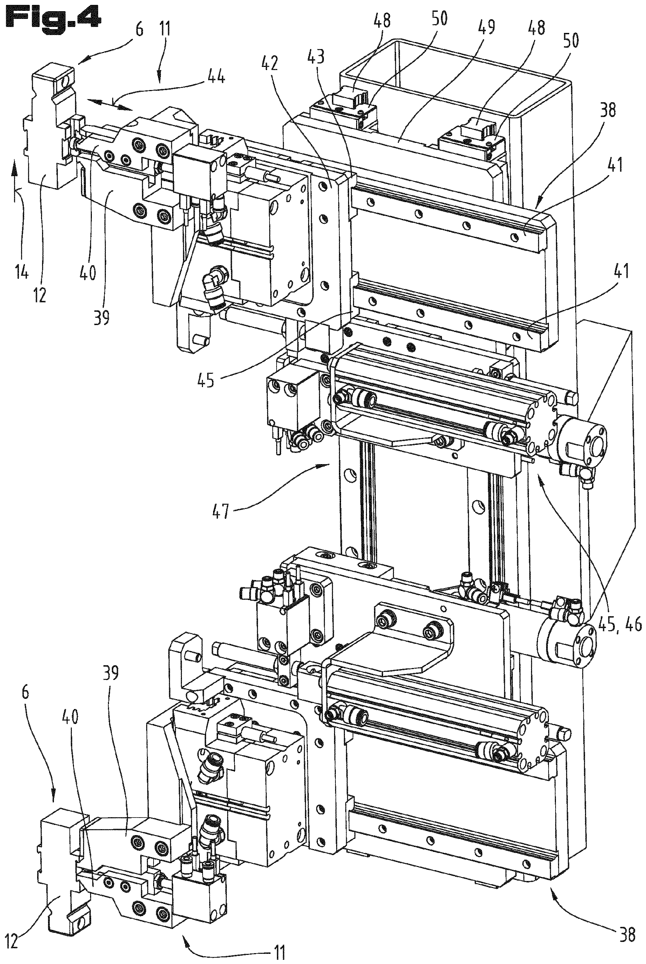

In der Fig. 4 ist eine weitere und gegebenenfalls für sich eigenständige Ausführungsform der Werkzeugwechselvorrichtung 16 in einer perspektivischen Ansicht gezeigt, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

Wie aus Fig. 4 ersichtlich, kann vorgesehen sein, dass die Werkzeugwechselvorrichtung 16, als Greifersystem 36 ausgebildet ist. Insbesondere kann vorgesehen sein, dass das Greifersystem 36 ein Schlittensystem 37 aufweist, an welchem die Greifvorrichtung 11 gelagert ist.

Das Schlittensystem 37 dient zur Manipulation der Greifvorrichtung 11. Das Schlittensystem 37 umfasst eine horizontale Linearführung 38 an welcher die Greifvorrichtung 11 angeordnet ist.

Die Greifvorrichtung 11 kann wie in der AT 515 526 B1 beschrieben ausgebildet sein. Insbesondere kann vorgesehen sein, dass die Greifvorrichtung 11 einen ersten Greifarm 39 und einen zweiten Greifarm 40 aufweist, welche relativ zueinander verschiebbar sind und mittels welchen das Biegewerkzeug 6 gegriffen und geklemmt werden kann. Die Greifarme 39, 40 können insbesondere dazu ausgebildet sein, um in eine Ausnehmung im Werkzeugkörper 12 des Biegewerkzeuges 6 eingreifen zu können.

Die horizontale Linearführung 38 kann eine oder vorzugsweise zwei Führungsschienen 41 aufweisen, an welcher ein Führungsschlitten 42 horizontal verschiebbar gelagert ist. Im hier dargestellten Ausführungsbeispiel umfasst die horizontale Linearführung 38 zwei Führungsschienen 41, wobei im Führungsschlitten 42 zwei damit korrespondierende Schienenaufnahmen 43 ausgebildet sind. Durch die Ausbildung von zwei zueinander beabstandeten Führungsschienen 41 bzw. Schienenaufnahmen 43 kann erreicht werden, dass vom Führungsschlitten 42 ein erhöhtes Biegemoment übertragen werden kann und somit die Stabilität des Schlittensystems 37 erhöht werden kann. Die Schienenaufnahme 43 ist formschlüssig in der Führungsschiene 41 geführt. Hierbei ist es möglich, dass die Schienenaufnahme 43 kugelgelagert in der Führungsschien 41 geführt ist. In einer weiteren alternativen Ausführungsvariante ist denkbar, dass zwischen Schienenaufnahme 43 und Führungsschiene 41 eine Gleitführung ausgebildet ist.

Mittels der horizontalen Linearführung 38 kann die Greifvorrichtung 11 in Längsrichtung 44 der Greifarme 39, 40 verschoben werden. Somit kann die Greifvorrichtung 11 zum in der Werkzeugaufnahme 5 eingesetzten Biegewerkzeug 6 hin oder von diesem wegbewegt werden. Insbesondere kann hierbei vorgesehen sein, dass die Greifvorrichtung 11 direkt am Führungsschlitten 42 angeordnet ist und mittels Befestigungsmittel, wie etwa Schrauben, mit diesem verbunden ist.

Weiters kann ein Aktor 45 vorgesehen sein, welcher den Führungsschlitten 42 in Längsrichtung 44 der Greifarme 39, 40 bewegt. Der Aktor 45 kann beispielsweise als elektromotorischer Antrieb, als elektromotorischer Spindeltrieb, als Hydraulikzylinder und dergleichen ausgebildet sein. Im aktuell gezeigten Ausführungsbeispiel ist der Aktor 45 in Form eines Pneumatikzylinders 46 ausgebildet. Mittels dem Pneumatikzylinder 46 kann die Greifvorrichtung 11 in eine ausgeschobene Einsetzstellung und in eine zurückgezogene Ruhestellung bewegt werden. Der Pneumatikzylinder 46 ist insbesondere dazu ausgebildet um die Greifvorrichtung 11 möglichst schnell zwischen diesen beiden Stellungen bewegen zu können.

Die ausgeschobene Einsetzstellung ist jene Stellung, in welcher das Biegewerkzeug 6 in vertikaler Einsetzrichtung 14 in die Werkzeugaufnahme 5 eingesetzt werden kann.

Wenn sich die Greifvorrichtung 11 in der zurückgezogenen Ruhestellung befindet, kann das Biegewerkzeug 6 in horizontaler Verschieberichtung 13 an den anderen in der Werkzeugaufnahme 5 aufgenommenen Biegewerkzeugen 6 vorbeibewegt werden.

Das Schlittensystem 37 kann darüber hinaus eine vertikale Linearführung 47 umfassen, mittels welcher die Greifvorrichtung 11 respektive die horizontale Linearführung 38 in vertikaler Einsetzrichtung 14 verstellbar ist. Analog zur bereits beschriebenen horizontalen Linearführung 38 kann vorgesehen sein, dass die vertikale Linearführung 47 eine oder mehrere Führungsschienen 48 aufweist, an welcher ein Führungsschlitten 49 geführt ist. Analog zur bereits beschriebenen Ausführungsvariante kann der Führungsschlitten 49 eine oder mehrere Schienenaufnahmen 50 aufweisen, welche mit den Führungsschienen 48 zusammenwirken.

Insbesondere kann vorgesehen sein, dass die Führungsschienen 41 der horizontalen Linearführung 38 am Führungsschlitten 49 der vertikalen Linearführung 47 angeordnet sind und dadurch vertikal verschiebbar sind.

Weiters ist aus Fig. 4 ersichtlich, kann vorgesehen sein, dass am Greifersystem 36 zwei der Greifvorrichtungen 11 angeordnet sind, wobei eine der Greifvorrichtungen 11 zum Manipulieren des oberen Biegewerkzeuges 6 und eine der Greifvorrichtungen 11 zum Manipulieren des unteren Biegewerkzeuges 6 eingesetzt wird.

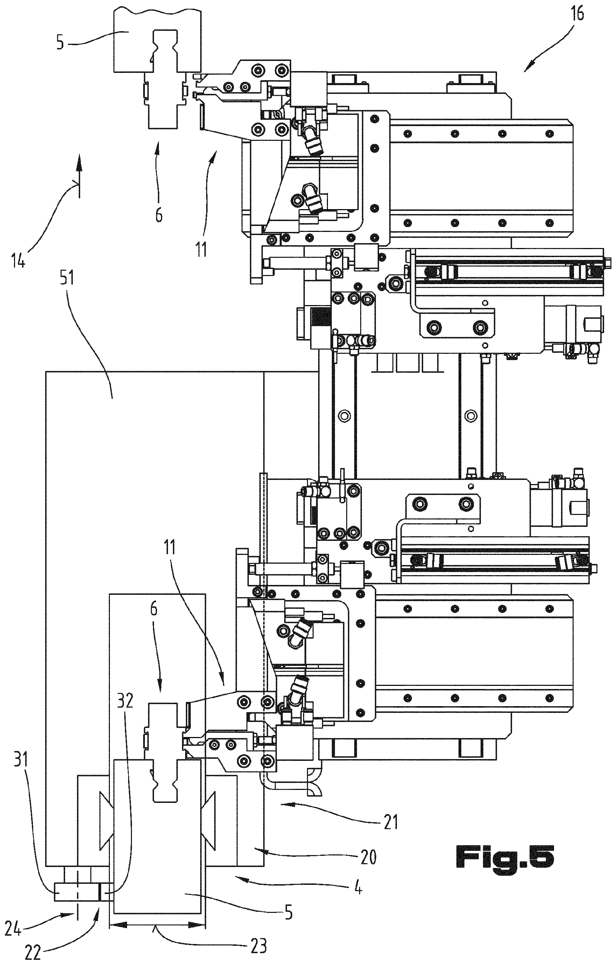

In der Fig. 5 ist eine weitere und gegebenenfalls für sich eigenständige Ausführungsform der Werkzeugwechselvorrichtung 16 in einer Ansicht von vorne gezeigt, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

In der Fig. 5 sind die Werkzeugaufnahmen 5 der Abkantpresse 2 mit den darin aufgenommenen Biegewerkzeugen 6 dargestellt.

Wie aus Fig. 5 ersichtlich, kann vorgesehen sein, dass die Werkzeugwechselvorrichtung 16 ein Portal 51 aufweist, welches die Werkzeugaufnahme 5 des ersten Pressbalken 4 überspannt. Die erste Linearführung 20 ist hierbei an der Innenseite 21 des ersten Pressbalken 4 angeordnet. Die zweite Linearführung 22 ist an der Außenseite 24 des ersten Pressbalken 4 angeordnet. Somit sind auch in diesem Ausführungsbeispiel die erste Linearführung 20 und die zweite Linearführung 22 im Abstand 23 zueinander angeordnet. Das Portal 51, an welchem das Schlittensystem 37 angeordnet ist, kann somit eine hohe Stabilität aufweisen.

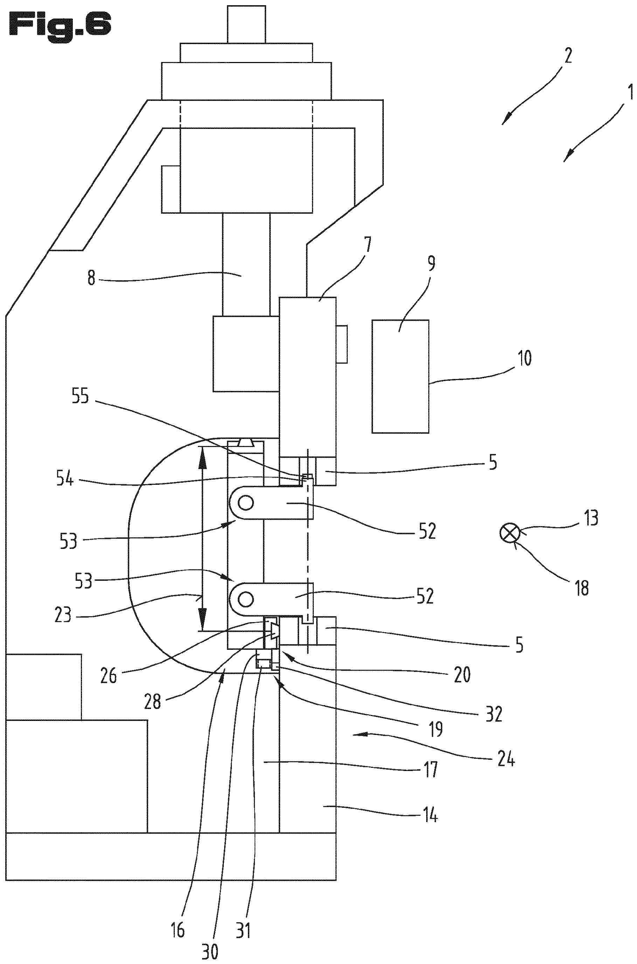

Wie aus Fig. 6 ersichtlich, kann vorgesehen sein, dass die Werkzeugwechselvorrichtung 16 einen Schwenkarm 52 aufweist, welcher in den Bereich des Biegewerkzeuges 6 respektive der Werkzeugaufnahme 5 eingeschwenkt werden kann. Durch diesen Schwenkarm 52 kann das Biegewerkzeug 6 mittels der Werkzeugwechselvorrichtung 16 in Längserstreckung 18 in der Werkzeugaufnahme 5 verschoben werden. Weiters kann vorgesehen sein, dass der Schwenkarm 52 mittels einem Schwenkantrieb 53 in seine Verschiebeposition bzw. in seine Ruheposition verschwenkt wird. Der Schwenkantrieb 53 kann beispielsweise in Form eines Servoantriebs ausgebildet sein. In einer Alternativvariante kann vorgesehen sein, dass der Schwenkantrieb 53 beispielsweise durch einen Hydraulik- oder Pneumatikzylinder gebildet wird und mittels diesem der Schwenkarm 52 schwenkbar ist.

Der Schwenkarm 52 kann zusätzlich zu einer Greifvorrichtung 11 an der Werkzeugwechselvorrichtung 16 angeordnet sein.

In einer weiteren Ausführungsvariante ist es auch denkbar, dass der Schwenkarm 52 anstatt der Greifvorrichtung 11 an der Werkzeugwechselvorrichtung 16 angeordnet ist.

Der Schwenkarm 52 kann insbesondere dazu dienen, um eine Feinadjustierung der Position der Biegewerkzeuge 6 erreichen zu können. Weiters kann vorgesehen sein, dass der Schwenkarm 52 eine Schwenkarmnase 54 aufweist, welche dazu ausgebildet ist, um in eine Aufnahmenut der Werkzeugaufnahme 5 eingreifen zu können.

In einer Weiterbildung kann auch vorgesehen sein, dass an der Schwenkarmnase 54 ein Reinigungsaufsatz 55 angeordnet ist, mittels welchem die Aufnahmenut der Werkzeugaufnahme 5 bedarfsweise gereinigt werden kann. Zum Reinigen der Werkzeugaufnahme 5 kann vorgesehen sein, dass der Schwenkarm 54 in die Werkzeugaufnahme 5 eingeschwenkt wird, sodass der Reinigungsaufsatz 55 in der Aufnahmenut der Werkzeugaufnahme 5 platziert ist und dass anschließend die Werkzeugwechselvorrichtung 16 in Längserstreckung 18 der Werkzeugaufnahme 5 bewegt wird, wodurch die Aufnahmenut der Werkzeugaufnahme 5 gereinigt wird.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden, wobei die Lage der Elemente zueinander und auch die Größenverhältnisse der Elemente dem zuständigen Fachmann eine für ihn erkennbare und ausführbare Lehre zum technischen Handeln vermitteln soll und nicht der künstlerischen Freiheit des Zeichners entspringt.

**Bezugszeichenaufstellung**

| | | | |
|---|---|---|---|
| 1 | Bearbeitungsanlage | 29 | zweite Führungsschiene |
| 2 | Abkantpresse | 30 | Positioniermotor |
| 3 | Blech | 31 | Ritzel |
| 4 | erster Pressbalken | 32 | Zahnstange |
| 5 | Werkzeugaufnahme | 33 | Länge der Werkzeugaufnahme |
| 6 | Biegewerkzeug | 34 | Zahnriemen |
| 7 | zweiter Pressbalken | 35 | Grundrahmen |
| 8 | Pressenantriebseinheit | 36 | Greifersystem |
| 9 | Rechnereinheit | 37 | Schlittensystem |
| 10 | Eingabe- Anzeigeeinheit | 38 | horizontale Linearführung |
| 11 | Greifvorrichtung | 39 | erster Greifarm |
| 12 | Werkzeugkörper | 40 | zweiter Greifarm |
| 13 | horizontale Verschieberichtung | 41 | Führungsschiene |
| 14 | vertikale Einsetzrichtung | 42 | Führungsschlitten |
| 15 | Biegekante | 43 | Schienenaufnahme |
| 16 | Werkzeugwechselvorrichtung | 44 | Längsrichtung |
| 17 | Maschinenrahmen | 45 | Aktor |
| 18 | Längserstreckung | 46 | Pneumatikzylinder |
| 19 | Antriebsvorrichtung | 47 | vertikale Linearführung |
| 20 | erste Linearführung | 48 | Führungsschiene vertikal |
| 21 | Innenseite erster Pressbalken | 49 | Führungsschlitten vertikal |
| 22 | zweite Linearführung | 50 | Schienenaufnahme vertikal |
| 23 | Abstand | 51 | Portal |
| 24 | Außenseite erster Pressbalken | 52 | Schwenkarm |
| 25 | Innenseite zweiter Pressbalken | 53 | Schwenkantrieb |
| 26 | erste Führungseinheit erste Linearführung | 54 | Schwenkarmnase |
| 27 | zweite Führungseinheit zweite Linearführung | 55 | Reinigungsaufsatz |
| 28 | erste Führungsschiene | | |

## Patentansprüche

1. Biegepresse, insbesondere Abkantpresse (2), mit einem ersten feststehenden Pressbalken (4), sowie einem relativ zu diesem verschiebbaren zweiten Pressbalken (7), einem Maschinenrahmen (17) an welchem die Pressbalken (4, 7) aufgenommen sind und welcher an einer Innenseite (21) der Pressbalken (4, 7) angeordnet ist, an den Pressbalken (4, 7) angeordneten bzw. ausgebildeten Werkzeugaufnahmen (5) zur Aufnahme von Biegewerkzeugen (6), und einer Werkzeugwechselvorrichtung (16), welche zum Positionieren der Biegewerkzeuge (6) in der Werkzeugaufnahme (5) vorgesehen ist, wobei die Werkzeugwechselvorrichtung (16) an einer ersten Linearführung (20) gelagert ist, welche an der Innenseite (21) des ersten Pressbalken (4) angeordnet ist, und dass zumindest eine zweite Linearführung (22) ausgebildet ist, welche in einem Abstand (23) zur ersten Linearführung (20) angeordnet ist und dass eine Antriebsvorrichtung (19) ausgebildet ist mittels welcher die Werkzeugwechselvorrichtung (16) in Längserstreckung (18) der Werkzeugaufnahmen (5) verschiebbar ist, **dadurch gekennzeichnet, dass** die zweite Linearführung (22) an einer Außenseite (24) des ersten Pressbalken (4) angeordnet ist, wobei die Werkzeugwechselvorrichtung (16) ein Portal (51) aufweist, welches die Werkzeugaufnahme (5) des ersten Pressbalken (4) überspannt und an welchem Portal (51) eine erste Führungseinheit (26) der ersten Linearführung (20) und eine zweite Führungseinheit (27) der zweiten Linearführung (22) angeordnet ist.

2. Biegepresse nach einem der vorhergehenden Ansprüche, **dadurch gekennzeichnet, dass** die Antriebsvorrichtung (19) eine Zahnstange (32) umfasst, welche am ersten Pressbalken (4) angeordnet ist, wobei ein Ritzel (31) welches mit einem an der Werkzeugwechselvorrichtung (16) angeordneten Positioniermotor (30) gekoppelt ist in die Zahnstange (32) eingreift, wodurch die Werkzeugwechselvorrichtung (16) in Längsrichtung der Werkzeugaufnahme (5) verschiebbar ist.

3. Biegepresse nach Anspruch 2, **dadurch gekennzeichnet, dass** die Zahnstange (32) an der Außenseite (24) des ersten Pressbalken (4) angeordnet ist.

4. Biegepresse nach Anspruch 2, **dadurch gekennzeichnet, dass** die Zahnstange (32) an der Innenseite (21) des ersten Pressbalken (4) angeordnet ist.

5. Biegepresse nach einem der vorhergehenden Ansprüche, **dadurch gekennzeichnet, dass** die Werkzeugwechselvorrichtung (16) ein Greifersystem (36) mit einer Greifvorrichtung (11) zum Manipulieren des Biegewerkzeuges (6) umfasst, welche Greifvorrichtung (11) an einem Schlittensystem (37) angeordnet ist, welches Schlittensystem (37) eine horizontale Linearführung (38) umfasst, mittels welcher die Greifvorrichtung (11) in Längsrichtung (44) der Greifarme (39, 40) des Greifersystems (36) zum Biegewerkzeug (6) hin oder vom Biegewerkzeug (6) weg verschiebbar ist, wobei das Schlittensystem (37) eine vertikale Linearführung (47) umfasst an welcher die horizontale Linearführung (38) mit der daran angeordneten Greifvorrichtung (11) vertikal verschiebbar angeordnet ist.

6. Biegepresse nach Anspruch 5, **dadurch gekennzeichnet, dass** an der vertikalen Linearführung (47) zwei der horizontalen Linearführungen (38) angeordnet sind, an welchen jeweils eine der Greifvorrichtungen (11) ausgebildet ist.

7. Biegepresse nach Anspruch 5 oder 6, **dadurch gekennzeichnet, dass** die horizontale Linearführung (38) einen auf einer Führungsschiene (41) geführten Führungsschlitten (42) umfasst, auf welchem die Greifvorrichtung (11) aufgenommen ist, wobei der Führungsschlitten (42) mittels einem Aktor (45), vorzugsweise einem Pneumatikzylinder (46), zwischen einer ausgeschobenen Einsetzstellung und einer zurückgezogenen Ruhestellung positionierbar ist.

8. Biegepresse nach einem der vorhergehenden Ansprüche, **dadurch gekennzeichnet, dass** die Werkzeugwechselvorrichtung (16) einen Schwenkarm (52) umfasst, welcher in eine der Werkzeugaufnahmen (5) einschwenkbar ist, wobei die Biegewerkzeuge (6) mittels dem Schwenkarm (52) positionierbar sind.

9. Biegepresse nach Anspruch 8, **dadurch gekennzeichnet, dass** der Schwenkarm (52) mit einem Elektromotor, insbesondere einem Servomotor, bewegungsgekoppelt ist.

## Claims

1. A bending press, in particular a press brake (2), having a first fixed press beam (4) as well as a second press beam (7) movable relative thereto, a machine frame (17) on which the press beams (4, 7) are held and which is arranged on an inner side (21) of the press beams (4, 7), tool holders (5) for holding bending tools (6) arranged on and/or provided on the press beams (4, 7), and a tool-changing device (16) provided for positioning the bending tools (6) in the tool holder (5), wherein the tool-changing device (16) is mounted on a first linear guide (20), which is arranged on the inner side (21) of the first press beam (4), and that at least one second linear guide (22) is provided, which is arranged at a distance (23) from the first linear guide (20) and that a drive device (19) is provided by means of which the tool-changing device (16) can be displaced in the longitudinal extension (18) of the tool holders (5), **characterized in that** the second linear guide (22) is arranged on an outer side (24) of the first press beam (4), wherein the tool-changing device (16) has a portal (51), which spans the tool holder (5) of the first press beam (4) and on which portal (51) a first guide unit (26) of the first linear guide (20) and a second guide unit (27) of the second linear guide (22) are arranged.

2. The bending press according to one of the preceding claims, **characterized in that** the drive device (19) comprises a toothed rack (32), which is arranged on the first press beam (4), wherein a sprocket (31), which is coupled to a positioning motor (30) arranged on the tool-changing device (16), engages with the toothed rack (32), whereby the tool-changing device (16) is displaceable in the longitudinal direction of the tool holder (5).

3. The bending press according to claim 2, **characterized in that** the toothed rack (32) is arranged on the outer side (24) of the first press beam (4).

4. The bending press according to claim 2, **characterized in that** the toothed rack (32) is arranged on the inner side (21) of the first press beam (4).

5. The bending press according to one of the preceding claims, **characterized in that** the tool-changing device (16) comprises a gripping system (36) with a gripping device (11) for manipulating the bending tool (6), which gripping device (11) is arranged on a carriage system (37), which carriage system (37) comprises a horizontal linear guide (38) by means of which the gripping device (11) can be displaced towards the bending tool (6) or away from the bending tool (6) in the longitudinal direction (44) of the gripping arms (39, 40) of the gripping system (36), wherein the carriage system (37) comprises a vertical linear guide (47) on which the horizontal linear guide (38) with the gripping device (11) arranged thereon is arranged such that it can be vertically displaced.

6. The bending press according to claim 5, **characterized in that** on the vertical linear guide (47), two of the horizontal linear guides (38) are arranged, on which one of the gripping devices (11) is provided respectively.

7. The bending press according to claim 5 or 6, **characterized in that** the horizontal linear guide (38) comprises a guide carriage (42) guided on a guide rail (41), the gripping device (11) being received on said guide carriage (42), wherein the guide carriage (42) can be positioned between an extended insertion position and a retracted rest position by means of an actuator (45), preferably a pneumatic cylinder (46).

8. The bending press according to one of the preceding claims, **characterized in that** the tool-changing device (16) comprises a pivoting arm (52), which is pivotable into one of the tool holders (5), wherein the bending tools (6) can be positioned by means of the pivoting arm (52).

9. The bending press according to claim 8, **characterized in that** the pivoting arm (52) is motion-coupled to an electric motor, in particular a servomotor.

## Revendications

1. Presse à cintrer, en particulier presse plieuse (2), avec un premier sommier (4) fixe, ainsi qu'avec un deuxième sommier (7) déplaçable par rapport au premier, un bâti de machine (17) sur lequel les sommiers (4, 7) sont reçus et qui est disposé sur un côté intérieur (21) des sommiers (4, 7), des logements d'outil (5) disposés ou respectivement constitués sur les sommiers (4, 7) pour la réception d'outils de cintrage (6), et un dispositif de changement d'outil (16) qui est prévu pour le positionnement des outils de cintrage (6) dans le logement d'outil (5), le dispositif de changement d'outil (16) étant supporté sur un premier guidage linéaire (20) qui est disposé sur le côté intérieur (21) du premier sommier (4), et au moins un deuxième guidage linéaire (22) étant constitué, lequel est disposé à une distance (23) du premier guidage linéaire (20), et un dispositif d'entraînement (19) étant constitué, au moyen duquel le dispositif de changement d'outil (16) peut être déplacé dans l'étendue longitudinale (18) des logements d'outil (5), **caractérisée en ce que** le deuxième guidage linéaire (22) est disposé sur un côté extérieur (24) du premier sommier (4), le dispositif de changement d'outil (16) comportant un portique (51), lequel enjambe le logement d'outil (5) du premier sommier (4) et sur lequel portique (51) sont disposées une première unité de guidage (26) du premier guidage linéaire (20) et une deuxième unité de guidage (27) du deuxième guidage linéaire (22).

2. Presse de cintrage selon l'une des revendications précédentes, **caractérisée en ce que** le dispositif d'entraînement (19) comprend une crémaillère (32) qui est disposée sur le premier sommier (4), où un pignon (31) qui est couplé à un moteur de positionnement (30) disposé sur le dispositif de changement d'outil (16) engrène dans la crémaillère (32), ce qui fait que le dispositif de changement d'outil (16) peut être déplacé dans la direction longitudinale du logement d'outil (5).

3. Presse de cintrage selon la revendication 2, **caractérisée en ce que** la crémaillère (32) est disposée sur le côté extérieur (24) du premier sommier (4).

4. Presse de cintrage selon la revendication 2, **caractérisée en ce que** la crémaillère (32) est disposée sur le côté intérieur (21) du premier sommier (4).

5. Presse de cintrage selon l'une des revendications précédentes, **caractérisée en ce que** le dispositif de changement d'outil (16) comprend un système de grappin (36) avec un dispositif de préhension (11) destiné à la manipulation de l'outil de cintrage (6), lequel dispositif de préhension (11) est disposé sur un système de chariot (37), lequel système de chariot (37) comprend un guidage linéaire (38) horizontal au moyen duquel le dispositif de préhension (11) peut être déplacé dans la direction longitudinale (44) des bras de préhension (39, 40) du système de grappin (36) en direction de l'outil de cintrage (6) ou à l'opposé de l'outil de cintrage (6), le système de chariot (37) comprenant un guidage linéaire (47) vertical sur lequel le guidage linéaire (38) horizontal, avec le dispositif de préhension (11) qui est disposé dessus, est disposé de façon déplaçable verticalement.

6. Presse de cintrage selon la revendication 5, **caractérisée en ce que**, sur le guidage linéaire (47) vertical, il est disposé deux des guidages linéaires (38) horizontaux sur lesquels respectivement un des dispositifs de préhension (11) est constitué.

7. Presse de cintrage selon la revendication 5 ou 6, **caractérisée en ce que** le guidage linéaire (38) horizontal comprend un chariot de guidage (42), guidé sur un rail de guidage (41), sur lequel est reçu le dispositif de préhension (11), le chariot de guidage (42) pouvant être positionné au moyen d'un actionneur (45), de préférence un cylindre pneumatique (46), entre une position d'insertion sortie et une position de repos rentrée.

8. Presse de cintrage selon l'une des revendications précédentes, **caractérisée en ce que** le dispositif de changement d'outil (16) comprend un bras pivotant (52) qui peut pivoter dans l'un des logements d'outil (5), les outils de cintrage (6) pouvant être positionnés au moyen du bras pivotant (52).

9. Presse de cintrage selon la revendication 8, **caractérisée en ce que** le bras pivotant (52) est couplé en mouvement à un moteur électrique, en particulier un servomoteur.
